# EUROPÄISCHE PATENTSCHRIFT

(11) **EP 2 132 866 B1**
(45) Veröffentlichungstag und Bekanntmachung des Hinweises auf die Patenterteilung: **04.08.2010**
(21) Anmeldenummer: 08734743.1
(22) Anmeldetag: 25.03.2008
(51) Int. Cl.: H02K 55/04, H02K 41/03, H02K 3/47, H02K 35/00

(54) **LINEARMASCHINE MIT EINEM PRIMÄRTEIL UND EINEM SEKUNDÄRTEIL**
LINEAR MACHINE HAVING A PRIMARY PART AND A SECONDARY PART
MACHINE LINÉAIRE COMPRENANT UNE PARTIE PRIMAIRE ET UNE PARTIE SECONDAIRE

(30) Priorität: 27.03.2007 DE 102007015168
(43) Veröffentlichungstag der Anmeldung: 16.12.2009
(73) Patentinhaber: Zenergy Power GmbH, 53359 Rheinbach (DE)
(72) Erfinder: WIEZORECK, Jan, 53117 Bonn (DE); HAHN, Ingolf, 53177 Bonn (DE); BÜHRER, Carsten, 53125 Bonn (DE); FALLKOWSKI, Jakob, 52249 Eschweiler (DE)
(74) Vertreter: Althaus, Arndt
(86) Internationale Anmeldenummer: PCT/EP2008/002333
(87) Internationale Veröffentlichungsnummer: WO 2008/116622

(56) Entgegenhaltungen:
- EP-A- 0 425 314
- EP-A- 0 774 826
- EP-A- 1 465 328
- EP-A- 1 811 638
- FR-A- 2 266 358

## Beschreibung

Die Erfindung betrifft eine Linearmaschine mit einem Primärteil, der mehrere, ringförmige, vorzugsweise konzentrisch zu einer Achse angeordnete, durch Zwischenelemente voneinander beabstandete Primärspulen aufweist, und mit einem Sekundärteil, der mehrere, mit Gleichstrom beaufschlagbare, axial nebeneinander mit wechselnder Polarität angeordnete Sekundärspulen mit Supraleiterwicklungen aufweist, wobei der eine Teil relativ zum anderen Teil parallel zur Achse hin- und herbewegbar ist.

Aus der DE 195 42 551 A1 ist ein Linearmotor mit einem hohlzylindrischen Primärteil bekannt, der ringförmige, konzentrisch zu einer Bewegungsachse eines Sekundärteils angeordnete Primärspulen aufweist, die mit Mehrphasenstrom betreibbar sind. Zwischen den Primärspulen sind aus weichmagnetischem Material bestehende Ringbleche angeordnet, die als Zwischenelemente zum Beabstanden benachbarter Primärspulen dienen und magnetisierbare Zähne bilden, um den magnetischen Fluß zu verstärken und zur Aufnahme, in der der Sekundärteil angeordnet ist, hinzuleiten. Die Primärspulen und die Ringbleche sind in einem hohlzylindrischen Joch aus magnetisierbarem Material aufgenommen, das einen magnetischen Rückschluß bildet. Der Sekundärteil ist axial verschieblich innerhalb der von dem Primärteil gebildeten Aufnahme angeordnet. Der Sekundärteil weist mehrere Feldmagnete aus Supraleiterwicklungen auf, die in Axialrichtung hintereinander mit abwechselnder Polarität angeordnet sind. Bei der DE 195 42 551 sollen die Magnetfelder der Sekundärwicklungen senkrecht zur Achse des Sekundärteils stehen. Um diese Feldrichtung mit gewickelten Spulen zu erzeugen, muss die Achse jeder einzelnen stromdurchflossenen Spule senkrecht zur Bewegungsachse des Linearmotors liegen. Nur bei Verwendung von Dauermagneten oder supraleitenden Festkörpermagneten können diese Magnete mit ihrer inneren Umfangsfläche an einem zylindrischen Joch aus magnetisierbarem Material anliegen. Diese sind dann zwar ringförmig ausgeführt, aber radial magnetisiert. Bei gewickelten Sekundärspulen hingegen muss eine Anordnung gewählt werden, bei der die gewickelten Spulen auf der Mantelfläche des Tragkörpers in Umfangsrichtung und in Axialrichtung nebeneinander versetzt liegen. Die bei Strombeauschlagung der Primär- und Sekundarspulen erzeugten magnetischen Kräfte erzeugen eine Relativbewegung zwischen Primär- und Sekundärteil.

Aus der EP 1 465 328 A1 ist ein Linearmotor bekannt, bei der Primär- und Sekundärteil umgekehrt angeordnet sind, so daß der Sekundärteil außen liegt und den Primärteil umgibt.

Die Magnetisierbarkeit der weichmagnetischen Zähne ist wegen der auftretenden magnetischen Sättigung des weichmagnetischen Materials begrenzt. Um bei hohen Stromdichten in den Spulen des Primärteils höhere Kraftdichten zwischen Primär- und Sekundärteil zu erreichen, ist vorgeschlagen worden, die Windungszahl der Primärspulen zu erhöhen oder die Menge an magnetisierbarem Material zu vergrößern. Für runde bzw. polysolenoide Linearmotoren sind mit diesen Maßnahmen im Versuchsstadium Kraftdichten bis etwa 8 N/cm² erreicht worden. Allerdings müssen die Baugröße und das Gewicht der Linearmotoren hierzu signifikant vergrößert werden.

Aus Superconductor Science and Technology, 17 (2004), Seite 445 bis 449 ist ein Konzept für einen Linearmotor bekannt, bei welchem der Stator Primärspulen aus einem Supraleitermaterial aufweist, die aus hochtemperatursupraleitenden Doppel-Pancake-Spulen bestehen. Um mit dem Linearmotor Kraftdichte in der Größenordnung von 14 N/cm² zu erreichen, wird ein Aktuator vorgeschlagen, der mit NdFeB-Magneten bestückt ist. Als alternatives Konzept wird ein Aktuator vorgeschlagen, der aus Festkörpersupraleitern besteht, die mittels einer Kombination von Eisenlaminatscheiben und YBCO gebildet werden.

Aus der EP 0 425 314 A1 ist ein Linearmotor bekannt, bei welchem sowohl die Spulen im Primärteil als auch die Spulen im Sekundärteil aus Sattelspulen bestehen, die bogenförmig gekrümmt und axial versetzt nebeneinander angeordnet sind. Das Magnetfeld der Sattelspulen im Primärteil und im Sekundärteil steht senkrecht zur Bewegungsachse.

Aufgabe der Erfindung ist es, eine Linearmaschine zu schaffen, bei der mit konstruktiven Maßnahmen am Primärteil und/oder Sekundärteil auch bei kleiner Baugröße der Linearmaschinen deutlich höhere Kraftdichten ermöglicht werden.

Diese Aufgabe wird erfindungsgemäß dadurch gelöst, daß die Anordnung der Primärspulen im Primärteil als Luftspaltwicklung mit Zwischenelementen aus nicht magnetisierbarem Material ausgeführt ist und die Sekundärspulen aus Wicklungen eines Hochtemperatursupraleiters bestehen, wodurch Kraftdichten von mehr als 18 N/cm² erreichbar sind. Die Linearmaschine ist vorzugsweise als Linearmotor ausgeführt, bei welcher durch Strombeaufschlagung der Primär- und Sekundärspulen über die hierdurch erzeugten Magnetfelder eine Relativbewegung zwischen Primär- und Sekundärteil parallel zur Achse bewirkt wird und die Erfindung wird nachfolgend vorrangig mit Bezug hierzu beschrieben. Die Linearmaschine kann jedoch auch als Generator ausgeführt sein, bei der ein durch die Relativbewegung zwischen Primär- und Sekundärteil in den Primärspulen induzierter Strom zur Energiegewinnung umgewandelt wird. Die hohen Kraftdichten können bei Ausgestaltung der Linearmaschine als Linearmotor durch Strombeaufschlagung der Primärspulen mit Wechselstrom und der Sekundärspulen mit Gleichstrom erreicht werden. Da die Anordnung der Primärspulen und vorzugsweise auch die Anordnung der Sekundärspulen als Luftspaltwicklung ausgeführt ist, d.h. weder zwischen den Primärspulen noch zwischen den Sekundärspulen magnetisierbares Material zur Flußführung angeordnet ist, wird bei der erfindungsgemäßen Linearmaschine die Kraftdichte nicht durch eine Sättigungsmagnetisierung begrenzt.

Der Strombelag des Primärteils, d.h. der Strom in Umfangsrichtung je axialer Länge des Primärteils, kann gegenüber den bekannten Linearmotoren ohne Vergrößerung der Baugröße des Linearmotors erhöht werden, wodurch die zum Strombelag proportionale Kraftdichte ohne Sättigungseffekte steigt. Zwischen den Primärspulen ist vorzugsweise keinerlei Eisen oder magnetisierbares Material zur Bündelung des magnetischen Flusses angeordnet. Durch die Verwendung von Sekundärspulen aus hochtemperatursupraleitfähigem Material, das eine Sprungtemperatur aufweist, die höher als 77K liegt, im Sekundärteil, können die Sekundärspulen mit hohen Gleichströmen beaufschlagt werden, um extrem starke Magnetfelder in der Aufnahme erzeugen können. Ein weiterer Vorteil beim erfindungsgemäßen Linearmotor besteht darin, daß ein in Axialrichtung nahezu glatter Kraftverlauf erreicht wird, da durch die Luftspaltwicklung Reluktanzkräfte praktisch weitgehend entfallen und damit kaum Rastkräfte auftreten. Außerdem kann der Linearmotor, da auf Permanentmagneten und magnetisierbares Material im Primär- und Sekundärteil verzichtet wird und somit bei Abschalten der Strombeaufschlagung keine magnetischen Kräfte auftreten, relativ einfach gewartet oder gereinigt werden.

Ein hoher Strombelag des Primärteils kann insbesondere dadurch erreicht werden, daß der Füllfaktor des Primärteils hoch gewählt ist. Der Füllfaktor ist definiert als das Volumenverhältnis vom Volumen der stromdurchflossenen Primärspulen zum Volumen der Zwischenelemente sowie von ggf. vorhandenen Zwischenräumen zwischen den Primärspulen. Der Füllfaktor des Primärteils ist vorzugsweise größer als 70% und insbesondere größer als 85%. In Axialrichtung benachbarte Primärspulen sind vorzugsweise mit einem um 120° phasenverschobenen Wechselstrom beaufschlagt, wodurch der Linearmotor einen Drei-Phasenmotor (Drehstrommotor) bildet. Bei einem Zwei-Phasenmotor oder einem Mehrphasenmotor mit mehr als drei Phasen kann die Phasenverschiebung anders angepaßt oder gewählt werden.

Die Primärspulen können bei der bevorzugten Ausgestaltung Wicklungen aus einem Normalleiter wie insbesondere einem Leiter aus Aluminium oder Kupfer aufweisen, wodurch die Primärspulen gegebenenfalls in kostengünstiger Weise z.B. flüssig- oder gasgekühlt werden können. Insbesondere vorteilhaft ist eine Kühlung mit z.B. Wasser oder Öl. Der Normalleiter kann insbesondere auch aus einem Hohlleiter bestehen, dessen Innenröhre für die Kühlung genutzt wird. Alternativ könnten die Wicklungen der Primärspulen aus einem supraleitfähigen, insbesondere einem hochtemperatursupraleitfähigen Leiter bestehen bzw. gefertigt sein. Die Strombeaufschlagung sollte dann mit Wechselstrom mit einer Frequenz von weniger als 100 Hz, insbesondere von weniger als 50 Hz erfolgen, um Wechselstromverluste in den supraleitenden Primärspulen gering zu halten, die ansonsten durch zusätzliche Kühlung ausgeglichen werden müßten. Beim erfindungsgemäßen Linearmotor lassen sich Kraftdichten von mehr als 18 N/cm², bei Verwendung von Supraleitern sowohl in den Sekundär- als auch in den Primärspulen sogar Kraftdichten von mehr als 25 N/cm² erzielen. Zur Kühlung der Primärspulen können auch zwischen den Spulen von einem Kühlmittel durchströmbare Kühlleitungen ausgebildet sein oder Spalte zwischen den Primärspulen und ggf. den Zwischenelementen offengelassen werden. Die Zwischenelemente können ringsegmentförmig ausgebildet sein, wodurch ein Kühlmittel an die von den Ringsegmenten nicht bedeckten Stirnseiten der Primärspulen gelangen kann. Die Zwischenelemente können sich vollflächig, partiell oder mit Zwischenräumen über die radiale Höhe der Primärspulen erstrecken. Die Zwischenelemente können auch aus Gitterstrukturen, Hohlkörpern oder Gitterkörpern bestehen, die ausreichende mechanische Stabilität aufweisen und gleichzeitig einen Kühlmitteldurchfluß erlauben.

Weiter vorzugsweise sind die Primärspulen und die Zwischenelemente von einem Joch ummantelt, das vorzugsweise aus nicht magnetisierbarem Material, insbesondere einem eisenlosen Leichtbaumaterial besteht. Alternativ kann das Joch zur Magnetfeldabschirmung aus eisenhaltigem und/oder magnetisierbarem Material bestehen. Das Joch und die Zwischenelemente können insbesondere ein mechanisches Haltegerüst für die Primärspulen bilden. Um die Zwischenelemente auch in Axialrichtung zu verankern, kann das Joch an seinem Innenumfang Nuten aufweisen, in die die Zwischenelemente formschlüssig eingreifen. Durch die Verankerung der Zwischenelemente an dem Joch können sich die Primärspulen in Axialrichtung an den Zwischenelementen abstützen, wodurch das Joch die auf die Primärspulen wirkenden Magnetfeld-Kräfte in Axialrichtung aufnehmen kann. Besonders vorteilhaft ist, wenn der Primärteil eisenlos ausgebildet ist, um bei Vermeidung von Sättigungseffekten zugleich eine besonders leichte Bauweise des Primärteils und damit der Linearmaschine zu erzielen. Alternativ kann das Joch ein magnetisierbares Material zur Rückführung des magnetischen Flusses aufweisen.

Die Primärspulen können in Kunststoff, vorzugsweise in Kunstharz, insbesondere in Epoxydharz eingegossen sein. Die Zwischenelemente sind in vorteilhafter Ausgestaltung der Erfindung ebenfalls aus Kunststoff, vorzugsweise Kunstharz, insbesondere Epoxydharz gefertigt und können mit einer Faserverstärkung beispielsweise durch Einlage von Glasfasermaterial verstärkt sein.

Die supraleitenden Sekundärspulen können hohe Stromdichten tragen, vorzugsweise Stromdichten von mehr als 50 A/mm², weiter vorzugsweise von mehr .als 70 A/mm² und insbesondere von mehr als 100 A/mm², wodurch ein äußerst starkes Magnetfeld mit den Sekundärspulen erzeugt werden kann. Die von dem Sekundärteil erzeugbaren Flußdichten können im Luftspalt mehr als 0,5 Tesla, vorzugsweise mehr als 1 Tesla und ggf. bis zu 2 Tesla erreichen. Der Sekundärteil weist vorzugsweise einen zylindrischen Tragkörper auf, an oder auf dessen Mantelfläche die Sekundärspulen angeordnet sind. Der Tragkörper des Sekundärteils ist vorzugsweise aus einem nicht magnetischen Material hergestellt, bspw. aus faserverstärktem Kunststoff. Der Tragkörper könnte auch aus einem magnetischen Material, beispielsweise Eisen, hergestellt sein oder bestehen. Bei einer Ausgestaltung sind die Sekundärspulen ringförmig ausgebildet und konzentrisch zueinander zur Achse auf dem zugehörigen Tragkörper des Sekundärteils befestigt angeordnet. In Axialrichtung benachbarte Sekundärspulen werden im Betrieb durch gegenpolige Verschaltung gegenphasig mit Gleichstrom beaufschlagt. Zwischen den Sekundärspulen können wiederum, um die Luftspaltwicklung zu verwirklichen, nicht magnetisierbare, ringförmige Abstandselemente angeordnet, an denen sich die Sekundärspulen in Axialrichtung abstützen. Benachbarte Sekundärspulen weisen bei dieser Ausgestaltung vorzugsweise einen Abstand voneinander auf, der wenigstens doppelt so groß und vorzugsweise größer ist als die in Axialrichtung bestehende Breite der jeweiligen Sekundärspulen. Auch können mehrere Spulen zu einem Paket zusammengefaßt werden, die alle die gleiche Stromflußrichtung aufweisen (in Serie oder parallel geschaltet). Erst benachbarte Spulenpakete werden dann jeweils mit umgekehrter Stromrichtung beaufschlagt.

Weitere Vorteile und Merkmale der Erfindung werden unter Bezugnahme auf in der Zeichnung schematisch dargestellte Ausführungsbeispiele eines Linearmotors als Linearmaschine beschrieben. Es zeigen:
- Fig. 1: einen erfindungsgemäßen Linearmotor mit einem Pri- märteil und einem Sekundärteil gemäß einem ersten Ausführungsbeispiel im Längsschnitt; und
- Fig. 2: den Sekundärteil aus Fig. 1 in perspektivischer An- sicht.

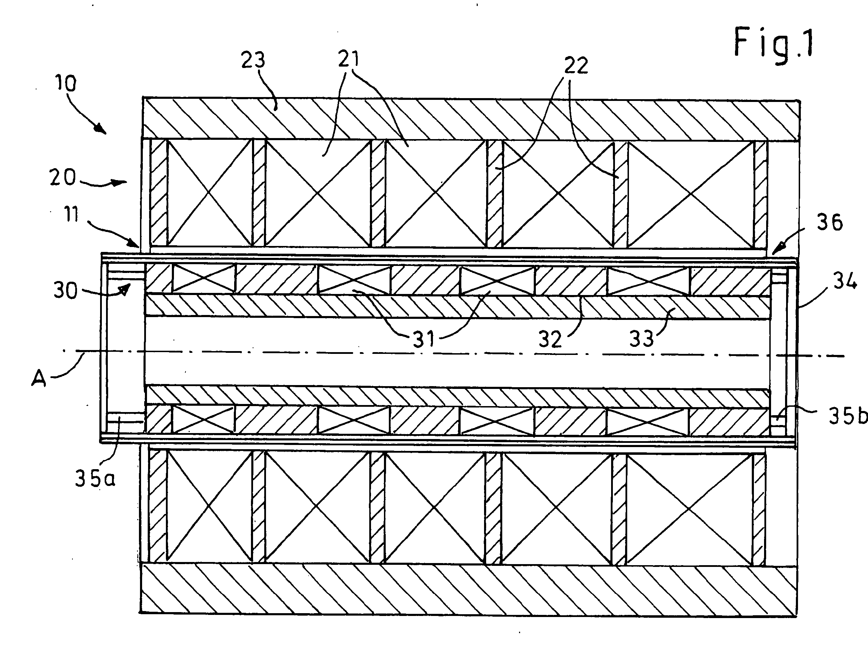

In Fig. 1 ist ein in seiner Gesamtheit mit 10 bezeichneter Linearmotor mit einem Primärteil 20 und einem Sekundärteil 30 dargestellt. Der Primärteil 20 begrenzt eine zylindrische Aufnahme 11, in der der Sekundärteil 30 entlang einer zentralen Achse A hin und her bewegbar ist. Der Primärteil 20 weist im gezeigten Ausführungsbeispiel fünf konzentrisch zur Achse A angeordnete Primärspulen 21 auf. Die Zeichnung stellt nur einen Motorausschnitt dar aus einem Gesamtmotor, da z.B. im Dreiphasenbetrieb die Anzahl der Spulen oder Spulenpakete durch 3 teilbar sein muß. Die Primärspulen 21 bestehen aus Ringscheibenspulen, die über nicht dargestellte Kontakte an ihrem Außenumfang mit z.B. um 120° phasenverschobenem Wechselstrom bzw. Drehstrom (Dreiphasenstrom) beaufschlagt werden können, um mit den Primärspulen 21 in der Aufnahme 11 ein magnetisches Wanderfeld zu erzeugen. Die aus einem Kupferleiter bestehenden Wicklungen der Primärspulen 21 sind zur mechanischen Stabilisierung in Epoxydharz eingegossen. Zwischen den Primärspulen 21 sind ebenfalls ringförmige Zwischenelemente 22 angeordnet, an denen sich die Primärspulen 21 mit ihren Stirnseiten in Axialrichtung abstützen. Die Zwischenelemente 22 erstrecken sich in Radialrichtung vom Innenumfang der Primärspulen 21 bis zum Außenumfang der Primärspulen 21. Am Außenumfang der Zwischenelemente 22 und der Primärspulen 21 liegt ein hohlzylindrisches Joch 23 an, an dem die Zwischenelemente 22 verankert sind (nicht dargestellt). Das Joch 23 und die Zwischenelemente 22 bilden hierdurch ein mechanisches Haltegerüst für die darin aufgenommenen Primärspulen 21.

Das Joch 23 um das Primärteil 20 kann aus nichtmagnetisierbarem Material oder zur Abschirmung auch aus magnetisierbarem Material bestehen. In letzterem Fall kann sogar eine Kraftdichteerhöhung auftreten. Wenn das Joch 23 aus el. leitendem Material besteht, so kann es vorzugsweise zur Verminderung von Wechselstromverlusten mittels geblechten und geschlitzten Materialien gebildet werden.

Die Zwischenelemente 22 können z.B. aus glasfaserverstärktem Kunststoff bestehen und sind somit erfindungsgemäß nicht magnetisierbar, wodurch das in der Aufnahme 11 bei Strombeaufschlagung der Primärspulen 21 erzeugte Magnetfeld nicht durch eine Sättigungsmagnetisierung der Zwischenelemente 22 begrenzt wird. Zwischen den Primärspulen 21 befindet sich im wesentlichen kein magnetisierbares Material zur Flußführung. Die Anordnung der in Axialrichtung nebeneinanderliegenden Primärspulen 21 ist daher mit einer sogenannten Luftspaltwicklung ausgeführt. Diese "Luftspalte" zwischen den Primärspulen 21 sind mit den ggf. partiell hohlen und/oder ausschließlich zur Isolierung dienenden Zwischenelementen 22 gefüllt. Im Primärteil 20 könne daher sehr breite Primärspulen 21 mit einer hohen Windungszahl pro axialer Länge eingesetzt werden. Da das Volumen der Zwischenelemente 22 nur ein Bruchteil des Volumens der Primärspulen 21 einnimmt, beträgt der Füllfaktor des Primärteils mit stromtragenden und mithin ein Magnetfeld (Wanderfeld) erzeugenden Windungen deutlich mehr als 50 %. Somit kann ein höherer Strom in die Primärspulen 21 des Primärteils 20 eingebracht werden.

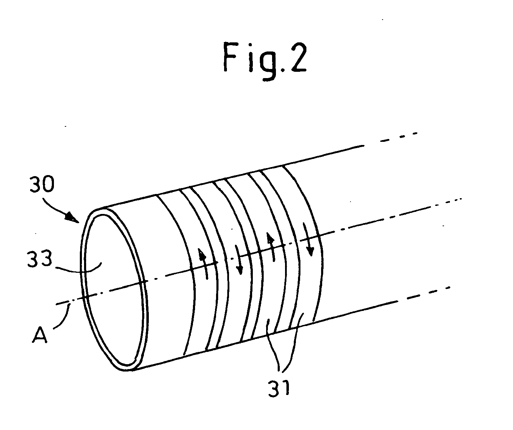

Der in den Fig. 1 und Fig. 2 dargestellte Sekundärteil 30 weist ringförmige, konzentrisch zur Achse A angeordnete Sekundärspulen 31 aus einem Hochtemperatursupraleiter auf. Diese bei kryogenen Temperaturen von mehr als 20 K supraleitfähigen Sekundärspulen 31 werden mit Gleichstrom beaufschlagt, wobei in Axialrichtung benachbarte Sekundärspulen 31 gegenphasig beschaltet sind. Die Hochtemperatursupraleiterwicklungen bzw. Sekundärspulen 31 im Sekundärteil 30 können als Pancake-Spulen, Doppelpancake-Spulen, als Pakete aus diesen Pancake-Spulen oder als kurze Solenoidspulen ausgeführt sein. Zwischen den Sekundärspulen 31 sind ebenfalls ringförmige Abstandselemente 32 angeordnet, die konzentrisch zur Achse A angeordnet sind. Die Abstandselemente 32 bestehen aus glasfaserverstärktem Epoxydharz und sind zusammen mit den Sekundärspulen 31 auf einem hohlzylindrischen Tragrohr 33 angeordnet. Das hohlzylindrische Tragrohr 33 kann aus weichmagnetischem, magnetisierbarem Material wie z.B. weichmagnetischem Eisen gefertigt sein oder ebenfalls aus z.B. glasfaserverstärktem Kunststoff bestehen. Um die Sekundärspulen 31 z.B. mit flüssigem Stickstoff kühlen zu können, ist der Kryostat 34 mit einem doppelwandigen Rohr 36 versehen. Der nicht dargestellte Zwischenraum zwischen der "warmen", äußeren Rohrwand und der "kälteren", inneren Rohrwand des Rohrs 36 ist evakuiert, um einen Wärmeeintrag von Außen in den Kryostaten 34 zu verhindern bzw. zu dämmen. Ggf. kann noch eine Isolationsschicht aus kommerziell erhältlicher Superisolationsfolie um die kalte Rohrwandung angebracht sein. Die Kraftübertragung von dem Sekundärteil 30 auf den Kryostaten 34 erfolgt mittels schematisch angedeuteter Übertragungselemente 35a und 35b. Die Übertragungselemente 35a, 35b bestehen aus einem Material mit einer geringen Wärmeleitfähigkeit und hoher mechanischer Festigkeit, z.B. aus glasfaserverstärkten Kunststoffen. Die Sekundärspulen 31 können mit Stromdichten von bis zu 100 A/mm² betrieben werden. Mit dem Linearmotor 10 mit erfindungsgemäß ausgeführten Primärteil 20 mit Luftspaltwicklung der Primärspulen und erfindungsgemäß aufgebautem Sekundärteil 30 können zwischen Primär- und Sekundärteil Kraftdichten von mehr als 18 N/cm² in der Aufnahme 11 erreicht werden, um den Sekundärteil 30 parallel zur Achse A zu verschieben.

Für den Fachmann ergeben sich aus der vorhergehenden Beschreibung und den Unteransprüchen zahlreiche Modifikationen. Die Anzahl der Primär- und Sekundärspulen in Axialrichtung ist nur beispielhaft und kann insbesondere mit der Breite der Spulen und der Gesamtlänge des Linearmotors variieren. Die Sekundärspulen können auch spiralförmig angeordnet sein. Das Joch und das Trägerrohr des Sekundärteils können auch aus eisenhaltigem Material bestehen. Das Trägerrohr für den Sekundärteil kann auch entfallen, wenn die Sekundärspulen zusammen mit den Abstandhaltern z.B. durch eine Vakuumimprägnierung fest miteinander verbunden worden sind. Alternativ kann das Trägerrohr für den Sekundärteil aus geblechtem und geschlitztem magnetisierbarem Material oder ebenfalls aus z.B. glasfaserverstärktem Kunststoff bestehen. Auch hartmagnetische Materialien können in dem gleichstromdurchflossenen Sekundärteil als Trägerrohr zum Einsatz kommen. Insbesondere bei der Verwendung von normalleitenden Primärspulen kann deren Kühlung mit z.B. Wasser, Öl, Gas oder Stickstoff (N₂) indirekt oder vorzugsweise direkt erfolgen. Alternativ kann auch eine geeignete Gas- oder Trockenkühlung eingesetzt werden, die eine Betriebstemperatur unter 77K erlaubt, z.B. 20K oder 30K. Um Wirbelstromverluste im Primärteil weiter zu verringern, können die Primärspulen mit Litzwire-Wicklungen versehen sein. Ggf. könnte auch ein zweites Primärteil innerhalb des Sekundärteils angeordnet werden, um die Kraftdichte weiter zu erhöhen. Anstelle des Sekundärteils könnte auch der Primärteil mit dem bei Strombeaufschlagung erzeugten Magnetfeld parallel zur Achse bewegt werden. Der Primärteil könnte innen und der Sekundärteil könnte außen angeordnet sein. Bei einer Ausgestaltung der Linearmaschine als Generator könnte der mit Gleichstrom beaufschlagte Sekundärteil mechanisch bewegt werden, z.B. durch eine auf- und absinkende Boje eines Wellenkraftwerkes. Der mittels dieser Bewegung des Sekundärteils in den Primärwicklungen des Primärteils induzierte Strom könnte zur Energiegewinnung genutzt werden und die Linearmaschine funktioniert dann generatorisch. Anstelle des Sekundarteils könnte auch der Primärteil bei ortsfestem Sekundärteil die Hin- und Herbewegung parallel zur Achse ausführen, ohne den Schutzbereich der anhängenden Ansprüche zu verlassen.

## Patentansprüche

1. Linearmaschine mit einem Primärteil (20), der mehrere, ringförmige, konzentrisch zu einer Achse (A) angeordnete, durch Zwischenelemente (22) voneinander beabstandete Primärspulen (21) aufweist, und mit einem Sekundärteil (30), der mehrere, mit Gleichstrom beaufschlagbare, axial nebeneinander mit wechselnder Polarität angeordnete Sekundärspulen (31) mit Supraleiterwicklungen aufweist, wobei der eine Teil relativ zum anderen Teil parallel zur Achse bewegbar ist, wobei die Anordnung der Primärspulen (21) im Primärteil (20) als Luftspaltwicklung mit Zwischenelementen (22) aus nicht magnetisierbarem Material ausgeführt ist und die Sekundärspulen (31) aus Wicklungen eines Hochtemperatursupraleiters bestehen, wodurch Kraftdichten von mehr als 18 N/cm² erreichbar sind, wobei die Sekundärspulen (31) ringförmig ausgebildet sind und konzentrisch zueinander um den Tragkörper (33) angeordnet sind und wobei zwischen den Sekundärspulen (31) Abstandselemente angeordnet sind, an denen sich die Sekundärspulen (31) in Axialrichtung abstützen.

2. Linearmaschine nach Anspruch 1, **dadurch gekennzeichnet, daß** die Anordnung der Sekundärspulen (31) im Sekundärteil (20) als Luftspaltwicklung ausgeführt ist.

3. Linearmaschine nach Anspruch 1 oder 2, **dadurch gekennzeichnet, daß** zwischen den Primärspulen (21) des Primärteils (20) und zwischen den Sekundärspulen (31) des Sekundärteils (30) kein magnetisierbares Material, insbesondere kein Eisen, zur Bündelung des magnetischen Flusses angeordnet ist.

4. Linearmaschine nach Anspruch 1, 2 oder 3, **dadurch gekennzeichnet, daß** der durch das Volumenverhältnis von Primärspulen (21) zu Zwischenelementen (22) und/oder Luftzwischenräumen definierte Füllfaktor des Primärteils (20) mehr als 70% und insbesondere mehr als 85% beträgt.

5. Linearmaschine nach einem der Ansprüche 1 bis 4, **dadurch gekennzeichnet, daß** die Primärspulen (21) aus Wicklungen eines Normalleiters, insbesondere aus Wicklungen eines Leiter oder Hohlleiters aus Aluminium oder Kupfer, bestehen.

6. Linearmaschine nach einem der Ansprüche 1 bis 4, **dadurch gekennzeichnet, daß** die Primärspulen aus Wicklungen eines Supraleiters, vorzugsweise eines Hochtemperatursupraleiter gefertigt sind.

7. Linearmaschine nach einem der Ansprüche 1 bis 6, **gekennzeichnet durch** ein die Primärspulen (21) und die Zwischenelemente (22) ummantelndes Joch (32) aus vorzugsweise unmagnetischem Material oder nicht magnetisierbarem Material, insbesondere Leichtbaumaterial, wobei vorzugsweise das Joch an seinem Innenumfang Nuten aufweist, an dem die Zwischenelemente (22) verankert sind.

8. Linearmaschine nach einem der Ansprüche 1 bis 7, **dadurch gekennzeichnet, daß** die Primärspulen (21) und/oder die Sekundärspulen (31) in Kunststoff, vorzugsweise in Kunstharz, insbesondere in Epoxydharz eingegossen sind, wobei die Zwischenelemente teilweise oder vollständig aus der Kunststoffummantelung bestehen.

9. Linearmaschine nach einem der Ansprüche 1 bis 8, **dadurch gekennzeichnet, daß** die Sekundärspulen (31) mit einer Stromdichte von mehr als 50 A/mm², vorzugsweise mehr als 70 A/mm² und insbesondere mehr als 100 A/mm² beaufschlagbar oder beaufschlagt sind und/oder dass das Magnetfeld der Sekundärspulen parallel zur Achse ausgerichtet ist.

10. Linearmaschine nach einem der Ansprüche 1 bis 9, **dadurch gekennzeichnet, daß** der Sekundärteil einen zylindrischen Tragkörper (33) aufweist, an dessen Mantelfläche die Sekundärspulen (32) angeordnet sind, wobei vorzugsweise der Tragkörper (33) nicht magnetisierbar ist oder aus nicht magnetisierbarem Material besteht.

11. Linearmaschine nach einem der Ansprüche 1 bis 10, **dadurch gekennzeichnet, daß** die Abstandselemente (32) nicht magnetisierbar sind oder aus nicht magnetisierbarem Material bestehen..

12. Linearmaschine nach Anspruch 11, **dadurch gekennzeichnet, daß** die Sekundärspulen eine Breite aufweisen und der Abstand zwischen benachbarten Sekundärspulen (31) mindestens der doppelten Breite der Sekundärspulen (31) entspricht.

13. Linearmaschine nach einem der Ansprüche 1 bis 12, **dadurch gekennzeichnet, daß** die Primärspulen mit Wechselstrom beaufschlagbar oder beaufschlagt sind, Primär- und Sekundärteil (20; 30) durch Strombeaufschlagung der Primär- und Sekundärspulen (21, 31) relativ zueinander bewegbar sind und die Linearmaschine einen Linearmotor (10) bildet.

14. Linearmaschine nach Anspruche 13, **dadurch gekennzeichnet, daß** die Primärspulen aus Wicklungen eines Supraleiters, vorzugsweise eines Hochtemperatursupraleiter gefertigt sind, wobei die Wechselstrombeaufschlagung mit einer Frequenz von weniger als 100 Hz, insbesondere von weniger als 50 Hz oszilliert.

15. Linearmaschine nach einem der Ansprüche 1 bis 14, **dadurch gekennzeichnet, daß** der Primärteil oder der Sekundärteil fremdbetätigt parallel zur Achse bewegbar sind, wobei der in den Primärspulen durch die Axialbewegung zwischen Primärteil und Sekundärteil induzierte Strom abgreifbar ist und die Linearmaschine einen Generator bildet.

## Claims

1. A linear machine having a primary part (20), which has a plurality of annular primary coils (21), which are arranged concentrically with respect to an axis (A) and are separated from one another by intermediate elements (22), and having a secondary part (30) which has a plurality of secondary coils (31), being aplliable with direct current and are arranged axially alongside one another with alternating polarity and have superconductor windings, with one part being movable relative to the other part parallel to the axis, wherein the arrangement of the primary coils (21) in the primary part (20) is in the form of an air-gap winding with intermediate elements (22) composed of non-magnetizable material, and the secondary coils (31) are composed of windings of a high-temperature superconductor, as a result of which force densities of more than 18 N/cm² can be achieved, with the secondary coils (31) being annular and being arranged concentrically with respect to one another around the supporting body (33), and with spacing elements being arranged between the secondary coils (31), on which spacing elements the secondary coils (31) are supported in the axial direction.

2. The linear machine as claimed in claim 1, **characterized in that** the arrangement of the secondary coils (31) in the secondary part (20) is in the form of an air-gap winding.

3. The linear machine as claimed in claim 1 or 2, **characterized in that** no magnetizable material, in particular no iron, for concentration of the magnetic flux is arranged between the primary coils (21) of the primary part (20) and between the secondary coils (31) of the secondary part (30).

4. The linear machine as claimed in claim 1, 2 or 3, **characterized in that** the filling factor of the primary part (20), which is defined by the volume ratio of the primary coils (21) to the intermediate elements (22) and/or the air intermediate spaces, is more than 70%, and in particular is more than 85%.

5. The linear machine as claimed in one of claims 1 to 4, **characterized in that** the primary coils (21) are composed of windings of a normal conductor, in particular of windings of a conductor or hollow conductor composed of aluminum or copper.

6. The linear machine as claimed in one of claims 1 to 4, **characterized in that** the primary coils are manufactured from windings of a superconductor, preferably a high-temperature superconductor.

7. The linear machine as claimed in one of claims 1 to 6, **characterized by** a yoke (32) which sheaths the primary coils (21) and the intermediate elements (22) and is composed of preferably non-magnetic material or non-magnetizable material, in particular lightweight material, wherein preferably, the yoke has slots on its internal circumference, on which slots the intermediate elements (22) are anchored.

8. The linear machine as claimed in one of claims 1 to 7, **characterized in that** the primary coils (21) and/or the secondary coils (31) are encapsulated in plastic, preferably in synthetic resin, in particular in epoxy resin, with the intermediate elements partially or completely consist of the plastic sheath.

9. The linear machine as claimed in one of claims 1 to 8, **characterized in that** a current density of more than 50 A/mm², preferably more than 70 A/mm² and in particular more than 100 A/mm² can be applied or is applied to the secondary coils (31), and/or **in that** the magnetic field of the secondary coils is aligned parallel to the axis.

10. The linear machine as claimed in one of claims 1 to 9, **characterized in that** the secondary part has a cylindrical supporting body (33) on whose casing surface the secondary coils (32) are arranged, wherein preferably, the supporting body (33) is non-magnetizable or is composed of non-magnetizable material.

11. The linear machine as claimed in one of claims 1 to 10, **characterized in that** the spacing elements (32) are non-magnetizable or are composed of non-magnetizable material.

12. The linear machine as claimed in claim 11, **characterized in that** the secondary coils have a width, and the distance between adjacent secondary coils (31) corresponds at least to twice the width of the secondary coils (31).

13. The linear machine as claimed in one of claims 1 to 12, **characterized in that** alternating current can be applied or is applied to the primary coils, the primary part and secondary part (20; 30) can be moved relative to one another by applying current to the primary and secondary parts (21, 31), and the linear machine forms a linear motor (10).

14. The linear machine as claimed in claim 13, **characterized in that** the primary coils are manufactured from windings of a superconductor, preferably a high-temperature superconductor, with the alternating current being applied oscillating at a frequency of less than 100 Hz, in particular of less than 50 Hz.

15. The linear machine as claimed in one of claims 1 to 14, **characterized in that** the primary part or the secondary part can be moved parallel to the axis, on an externally-operating basis, wherein the current which is induced in the primary coils by the axial movement between the primary part and the secondary part can be tapped off, and the linear machine forms a generator.

## Revendications

1. Machine linéaire comprenant une partie primaire (20) qui présente plusieurs bobines primaires (21) annulaires, agencées concentriques par rapport à un axe (A), espacées les unes des autres par des éléments intermédiaires (22), et comprenant une partie secondaire (30) qui présente plusieurs bobines secondaires (31), pouvant être alimentées en courant continu, agencées axialement les unes à côté des autres avec des polarités alternées, ayant des bobinages supraconducteurs, une partie étant déplaçable par rapport à l'autre, parallèlement à l'axe, l'agencement des bobines primaires (21) dans la partie primaire (20) étant réalisé en tant que bobinage à entrefers, ayant des éléments intermédiaires (22) en matériau non magnétisable, et les bobines secondaires (31) consistant en des bobinages d'un supraconducteur à haute température, de sorte que des densités de force de plus de 18 N/cm² peuvent être atteintes, les bobines secondaires (31) étant réalisées annulaires et agencées concentriques les unes par rapport aux autres, autour du corps porteur (33), et les bobines secondaires (31) s'appuyant dans la direction axiale sur des éléments d'écartement agencés entre elles.

2. Machine linéaire selon la revendication 1, **caractérisée en ce que** l'agencement des bobines secondaires (31) dans la partie secondaire (20) est réalisé en tant que bobinage à entrefers.

3. Machine linéaire selon la revendication 1 ou 2, **caractérisée en ce qu'**entre les bobines primaires (21) de la partie primaire (20) et entre les bobines secondaires (31) de la partie secondaire (30), il n'y a pas de matériau magnétisable, en particulier pas de fer, pour focaliser le flux magnétique.

4. Machine linéaire selon la revendication 1, 2 ou 3, **caractérisée en ce que** le coefficient de remplissage de la partie primaire (20), défini par le rapport volumique des bobines primaires (21) par rapport aux éléments intermédiaires (22) et/ou espaces intermédiaires d'air, est de plus de 70% et en particulier plus de 85%.

5. Machine linéaire selon l'une des revendications 1 à 4, **caractérisée en ce que** les bobines primaires (21) consistent en des bobinages d'un conducteur normal, en particulier des bobinages d'un conducteur ou d'un conducteur creux en aluminium ou en cuivre.

6. Machine linéaire selon l'une des revendications 1 à 4, **caractérisée en ce que** les bobines primaires sont fabriquées à partir de bobinages d'un supraconducteur, de préférence d'un supraconducteur à haute température.

7. Machine linéaire selon l'une des revendications 1 à 6, **caractérisée par** une culasse (32) enveloppant les bobines primaires (21) et les éléments intermédiaires (22), à base de préférence de matériau non magnétique ou non magnétisable, en particulier un matériau de construction légère, la culasse présentant de préférence sur son pourtour intérieur des rainures auxquelles les éléments intermédiaires (22) sont ancrés.

8. Machine linéaire selon l'une des revendications 1 à 7, **caractérisée en ce que** les bobines primaires (21) et/ou les bobines secondaires (31) sont moulées dans de la matière synthétique, de préférence de la résine synthétique, en particulier de la résine époxy, les éléments intermédiaires consistant partiellement ou entièrement en l'enveloppe de matériau synthétique.

9. Machine linéaire selon l'une des revendications 1 à 8, **caractérisée en ce que** les bobines secondaires (31) peuvent être alimentées ou sont alimentées avec une densité de courant de plus de 50 A/mm², de préférence plus de 70 A/mm² et en particulier plus de 100 A/mm², et/ou **en ce que** le champ magnétique des bobines secondaires est orienté parallèlement à l'axe.

10. Machine linéaire selon l'une des revendications 1 à 9, **caractérisée en ce que** la partie secondaire présente un corps porteur (33) cylindrique sur la surface latérale duquel sont agencées les bobines secondaires (32), de préférence le corps porteur (33) n'étant pas magnétisable ou consistant en du matériau non magnétisable.

11. Machine linéaire selon l'une des revendications 1 à 10, **caractérisée en ce que** les éléments d'écartement (32) ne sont pas magnétisables ou consistent en du matériau non magnétisable.

12. Machine linéaire selon la revendication 11, **caractérisée en ce que** les bobines secondaires présentent une largeur et la distance entre des bobines secondaires (31) voisines correspond au moins au double de la largeur des bobines secondaires (31).

13. Machine linéaire selon l'une des revendications 1 à 12, **caractérisée en ce que** les bobines primaires peuvent être alimentées ou sont alimentées en courant alternatif, les parties primaire et secondaire (20 ; 30) sont déplaçables l'une par rapport à l'autre par alimentation en courant des bobines primaire et secondaire (21, 31) et la machine linéaire forme un moteur linéaire (10).

14. Machine linéaire selon la revendication 13, **caractérisée en ce que** les bobines primaires sont fabriquées à base de bobinages d'un supraconducteur, de préférence d'un supraconducteur à haute température, l'alimentation en courant alternatif oscillant à une fréquence inférieure à 100 Hz, en particulier inférieure à 50 Hz.

15. Machine linéaire selon l'une des revendications 1 à 14, **caractérisée en ce que** la partie primaire ou la partie secondaire sont déplaçables parallèlement à l'axe par actionnement externe, le courant induit dans les bobines primaires par le mouvement axial entre partie primaire et partie secondaire pouvant être prélevé et la machine linéaire formant un générateur.
